(19) Europäisches Patentamt
European Patent Office
Office européen des brevets

(11) EP 0 845 496 B1

(12) **EUROPÄISCHE PATENTSCHRIFT**

(45) Veröffentlichungstag und Bekanntmachung des Hinweises auf die Patenterteilung:
**05.11.2003 Patentblatt 2003/45**

(51) Int Cl.[7]: **C08L 51/04**, C08L 55/02, C08F 279/02

(21) Anmeldenummer: **97120060.5**

(22) Anmeldetag: **17.11.1997**

(54) **Thermoplastische Hochglanz-Formmassen vom ABS-Typ**

ABS type high gloss molding

Masses à mouler à brillance élevée du type ABS

(84) Benannte Vertragsstaaten:
**BE DE ES FR GB IT NL**

(30) Priorität: **28.11.1996 DE 19649255**

(43) Veröffentlichungstag der Anmeldung:
**03.06.1998 Patentblatt 1998/23**

(73) Patentinhaber: **BAYER AG**
**51368 Leverkusen (DE)**

(72) Erfinder:
- **Eichenauer, Herbert, Dr.**
  **41539 Dormagen (DE)**
- **Leitz, Edgar, Dr.**
  **41541 Dormagen (DE)**

(56) Entgegenhaltungen:
**EP-A- 0 436 381** **US-A- 4 713 420**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 845 496 B1

## Beschreibung

ABS-Formmassen werden schon seit vielen Jahren in großen Mengen als thermoplastische Harze für die Herstellung von Formteilen aller Art eingesetzt. Dabei reicht das Eigenschaftsspektrum dieser Harze von relativ spröde bis hochzäh.

Ein spezielles Einsatzgebiet für ABS-Formmassen ist die Herstellung von Formteilen mit sehr hohem Oberflächenglanz, z.B. von Gehäusen und Abdeckungen (z.B. für Telefone, Küchenmaschinen, Haushaltsgeräte).

Ein bislang nicht zufriedenstellend gelöstes Problem ist die Bereitstellung von solchen Höchstglanzprodukten, die neben einem sehr hohen Oberflächenglanz eine verbesserte Kerbschlagzähigkeit und eine sehr gute thermoplastische Fließfähigkeit aufweisen.

Zwar sind ABS-Formmassen mit gutem Oberflächenglanz bekannt, die oben beschriebenen extremen Anforderungen können damit jedoch nicht erfüllt werden. So beschreiben z.B. die DE-OS 24 20 357 und DE-OS 24 20 358 die Verwendung spezieller Pfropfpolymerisate mit definierten Werten für u.a. Kautschukgehalte, Teilchengröße, Pfropfgrad, Styrol:Acrylnitril-Verhältnis in den Pfropfpolymeren und des eingesetzten Styrol/Acrylnitril-Copolymerisats. Trotz der relativ komplizierten Herstellung dieser Formmassen werden keine optimalen Zähigkeits-/Fließfähigkeits-Relationen erreicht.

EP-A 436 381 und US 4,713,420 beschreiben trimodale ABS-Formmassen auf Basis zweier Emulsions- und einer Masse-Komponente. Allerdings wird in diesen Formmassen aufgrund des Anteils an Masse-ABS-Polymer keine gute Zähigkeits-/Glanz-Relation erzielt.

Schließlich wird in EP-PS 470 229 ein Verfahren zur Herstellung hochglänzender ABS-Formmassen beschrieben. Ähnlich wie in den obengenannten DE-OS 24 20 357 und DE-OS 24 20 358 müssen auch hier zahlreiche Reaktionsparameter eingehalten werden. Gute Zähigkeiten werden nur bei einem sehr hohen Gehalt an technisch aufwendig herzustellendem grobteiligem Pfropfpolymer erhalten.

Es wurde nun gefunden, daß durch Einsatz zweier speziell aufgebauter bzw. speziell hergestellter ABS-Pfropfkautschuke in einer Harzmatrix Produkte mit extrem hohen Glanzwerten bei gleichzeitiger sehr guter Zähigkeit und Verarbeitbarkeit erhalten werden.

Gegenstand der Erfindung sind verbesserte thermoplastische Hochglanz-Formmassen vom ABS-Typ enthaltend

I) mindestens ein Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch $\alpha$-Methylstyrol, Methylmethacrylat oder N-Phenylmaleinimid, in Gegenwart einer Mischung aus einem Butadienpolymerisatlatex (A) mit einem Teilchendurchmesser $d_{50}$ $\leq$320 nm, vorzugsweise 260 bis 310 nm, einer Breite der Teilchendurchmesserverteilung (gemessen als $d_{90}$-$d_{10}$ aus der integralen Teilchendurchmesserverteilung) von 30 bis 100 nm, vorzugsweise von 40 bis 80 nm, und einem Gelgehalt $\leq$70 Gew.-%, vorzugsweise 40 bis 65 Gew.-%, und einem Butadienpolymerisatlatex (B) mit einem Teilchendurchmesser $d_{50}$ $\geq$370 nm, vorzugsweise 380 bis 450 nm, einer Breite der Teilchendurchmesserverteilung (gemessen als $d_{90}$-$d_{10}$ aus der integralen Teilchendurchmesserverteilung) von 50 bis 500 nm, vorzugsweise von 100 bis 400 nm, und einem Gelgehalt $\geq$70 Gew.-%, vorzugsweise 75 bis 90 Gew.-%, wobei die Butadienpolymerisatlatices jeweils 0 bis 50 Gew.-% eines weiteren Vinylmonomeren copolymerisiert enthalten und wobei das Massenverhältnis von eingesetzten Pfropfmonomeren zu eingesetzten Butadienpolymerisaten 25:75 bis 70:30 ist,

II) mindestens ein Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch $\alpha$-Methylstyrol, Methylmethacrylat oder N-Phenylmaleinimid, in Gegenwart eines Butadienpolymerisatlatex (C) mit einem Teilchendurchmesser $d_{50}$ von 110 bis 150 nm, vorzugsweise von 120 bis 140 nm, einer Breite der Teilchendurchmesserverteilung (gemessen als $d_{90}$-$d_{10}$ aus der integralen Teilchendurchmesserverteilung) von 20 bis 50 nm, vorzugsweise 25 bis 45 nm, und einem Gelgehalt von 80 bis 98 Gew.-%, vorzugsweise 85 bis 95 Gew.-%, wobei der Butadienpolymerisatlatex 0 bis 50 Gew.-% eines weiteren Vinylmonomeren copolymerisiert enthält und wobei das Massenverhältnis von eingesetzten Pfropfmonomeren zu eingesetztem Butadienpolymerisat 30:70 bis 60:40 ist, und

(III) mindestens ein kautschukfreies Copolymerisat aus Styrol und Acrylnitril im Gewichtsverhältnis 90:10 bis 50:50, wobei Styrol und/oder Acrylnitril ganz oder teilweise durch $\alpha$-Methylstyrol, Methylmethacrylat oder N-Phenylmaleinimid ersetzt werden kann.

Im allgemeinen können die erfindungsgemäßen Formmassen enthalten 2,5 bis 35 Gew.-Teile, vorzugsweise 5 bis 30 Gew.-Teile und besonders bevorzugt 7,5 bis 25 Gew.-Teile I, 5 bis 40 Gew.-Teile, vorzugsweise 7,5 bis 35

Gew.-Teile und besonders bevorzugt 10 bis 30 Gew.-Teile II und 25 bis 92,5 Gew.-Teile, vorzugsweise 35 bis 87,5 Gew.-Teile und besonders bevorzugt 45 bis 82,5 Gew.-Teile III.

Außerdem können die erfindungsgemäßen Formmassen weitere kautschukfreie nicht aus Vinylmonomeren aufgebaute Thermoplastharze enthalten, wobei man diese Thermoplastharze in Mengen bis zu 500 Gew.-Teilen, vorzugsweise bis zu 400 Gew.-Teilen und besonders bevorzugt bis zu 300 Gew.-Teilen (jeweils bezogen auf 100 Gew. -Teile I + II + III) verwendet.

Bei der Pfropfpolymerisation zur Herstellung der Komponente I) wird ein Gemisch aus mindestens zwei Butadienpolymerisatlatices, mindestens je einen von Typ (A) und (B), eingesetzt. Das Gewichtsverhältnis (A):(B) ist, bezogen auf den jeweiligen Feststoffanteil der Latices, vorzugsweise 90:10 bis 10:90, besonders bevorzugt 60:40 bis 30:70.

Bei der Pfropfpolymerisation zur Herstellung der Komponente II) wird ein von (A) und (B) verschiedener Butadienlatex (C) eingesetzt.

Die Butadienpolymerisatlatices (A), (B) und (C) können durch Emulsionspolymerisation von Butadien hergestellt werden. Diese Polymerisation ist bekannt und z.B. in Houben-Weyl, Methoden der Organischen Chemie, Makromolekulare Stoffe, Teil 1, S. 674 (1961), Thieme Verlag Stuttgart, beschrieben. Als Comonomere können bis zu 50 Gew.-% (bezogen auf die gesamte zur Butadienpolymerisatherstellung eingesetzte Monomerenmenge) eines oder mehrerer mit Butadien copolymerisierbarer Monomerer eingesetzt werden.

Beispiele für solche Monomere sind Isopren, Chloropren, Acrylnitril, Styrol, α-Methylstyrol, $C_1$-$C_4$-Alkylstyrole, $C_1$-$C_8$-Alkylacrylate, $C_1$-$C_8$-Alkylmethacrylate, Alkylenglycoldiacrylate, Alkylenglykoldimethacrylate, Divinylbenzol; vorzugsweise wird Butadien alleine eingesetzt. Es ist bei der Herstellung von (A) und (B) auch möglich, nach bekannten Methoden zunächst ein feinteiliges Butadienpolymerisat herzustellen und es anschließend in bekannter Weise zur Einstellung der erforderlichen Teilchendurchmesser zu agglomerieren.

Einschlägige Techniken sind beschrieben (vergl. EP-PS 0 029 613; EP-PS 0 007 810; DD-PS 144 415 DE-AS 1 233 131; DE-AS 1 258 076; DE-OS 2 101 650; US-PS 1 379 391).

Ebenfalls kann nach der sogenannten Saatpolymerisationstechnik gearbeitet werden, bei der zunächst ein feinteiliges Butadienpolymerisat hergestellt und dann durch Weiterumsatz mit Butadien enthaltenden Monomeren zu größeren Teilchen weiterpolymerisiert wird.

Prinzipiell kann man die Butadienpolymerisatlatices (A), (B) und (C) auch herstellen durch Emulgieren von feinteiligen Butadienpolymerisaten in wäßrigen Medien (vergl. japanische Patentanmeldung 55 125 102).

Der Butadienpolymerisatlatex (A) besitzt einen mittleren Teilchendurchmesser $d_{50} \leq 320$ nm, vorzugsweise 260 bis 310 nm, eine Breite der Teilchendurchmesserverteilung (gemessen als $d_{90}$-$d_{10}$ aus der integralen Teilchendurchmesserverteilung) von 30 bis 100 nm, vorzugsweise von 40 bis 80 nm, und einen Gelgehalt ≤ 70 Gew.-%, vorzugsweise 40 bis 65 Gew.-%.

Der Butadienpolymerisatlatex (B) besitzt einen mittleren Teilchendurchmesser $d_{50} \geq 370$ nm, vorzugsweise 380 bis 450 nm, eine Breite der Teilchendurchmesserverteilung (gemessen als $d_{90}$-$d_{10}$ aus der integralen Teilchendurchmesserverteilung) von 50 bis 500 nm, vorzugsweise von 100 bis 400 nm, und einen Gelgehalt ≥ 70 Gew.-%, vorzugsweise 75 bis 90 Gew.-%.

Der Butadienpolymerisatlatex (C) besitzt einen mittleren Teilchendurchmesser $d_{50}$ von 110 bis 150 nm, vorzugsweise 120 bis 140 nm, eine Breite der Teilchendurchmesserverteilung (gemessen als $d_{90}$-$d_{10}$ aus der integralen Teilchendurchmesserverteilung) von 20 bis 50 nm, vorzugsweise von 25 bis 45 nm, und einen Gelgehalt von 80 bis 98 Gew.-%, vorzugsweise 85 bis 95 Gew.-%.

Die Bestimmung des mittleren Teilchendurchmesser $d_{50}$ sowie die $d_{10}$- und $d_{90}$-Werte können durch Ultrazentrifugenmessung ermittelt werden (vgl. W. Scholtan, H. Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Butadienpolymerisatlatices (A), (B) und (C) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgatoren können die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von $C_{10}$-$C_{18}$-Fettsäuren, disproportionierte Abietinsäure) eingesetzt.

Die Pfropfpolymerisation bei der Herstellung der Pfropfpolymerisate I) und II) kann so durchgeführt werden, daß das Monomerengemisch kontinuierlich zu dem Gemisch der Butadienpolymerisatlatices (A) und (B) bzw. dem

Butadienpolymerisatlatex (C) alleine gegeben und polymerisiert wird.

Dabei werden bevorzugt spezielle Monomer: Kautschuk-Verhältnisse eingehalten und die Monomeren in einer bekannten Weise zum Kautschuklatex gegeben.

Zur Erzeugung der erfindungsgemäßen Komponente I) werden vorzugsweise 25 bis 70 Gew.-Teile, besonders bevorzugt 30 bis 60 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 30 bis 75 Gew.-Teilen, besonders bevorzugt 40 bis 70 Gew.-Teilen (jeweils bezogen auf Feststoff) des Butadienpolymerisatlatex-Gemisches aus (A) und (B) polymerisiert.

Zur Erzeugung der erfindungsgemäßen Komponente II) werden vorzugsweise 30 bis 60 Gew.-Teile, besonders bevorzugt 35 bis 55 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 40 bis 70 Gew.-Teilen, besonders bevorzugt 45 bis 65 Gew.-Teilen (jeweils bezogen auf Feststoff) des Butadienpolymerisatlatex (C) polymerisiert.

Die bei diesen Pfropfpolymerisationen eingesetzten Monomeren sind vorzugsweise Mischungen aus Styrol und Acrylnitril im Gew.-Verhältnis 90:10 bis 50:50, besonders bevorzugt im Gew.-Verhältnis 65:35 bis 75:25, wobei Styrol und/oder Acrylnitril ganz oder teilweise durch copolymerisierbare Monomere, vorzugsweise durch α-Methylstyrol, Methylmethacrylat oder N-Phenylmaleinimid ersetzt werden können.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationstufe).

Geeignete Molekulargewichtsregler sind beispielsweise Alkylmercaptane wie n-Dodecylmercaptan, t-Dodecylmercaptan; dimeres α-Methylstyrol; Terpinolen.

Als Initiatoren kommen anorganische und organische Peroxide, z.B. $H_2O_2$, Di-tert.-butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium-, oder Kaliumpersulfat, Kaliumperphosphat, Natriumperborat sowie Redox-Systeme in Betracht. Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur ist 25°C bis 160°C, vorzugsweise 40°C bis 90°C. Geeignete Emulgatoren sind oben angegeben.

Zur Erzeugung der erfindungsgemäßen Komponente I) kann die Pfropfpolymerisation vorzugsweise durch Monomerenzulauf derart durchgeführt werden, daß innerhalb der ersten Hälfte der Gesamtmonomerzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Als kautschukfreie Copolymerisate III) werden vorzugsweise Copolymerisate des Styrols und Acrylnitrils im Gewichtsverhältnis 90:10 bis 50:50 verwendet, wobei Styrol und/oder Acrylnitril ganz oder teilweise durch α-Methylstyrol, Methylmethacrylat oder N-Phenylmaleinimid ersetzt werden kann.

Diese Copolymerisate besitzen vorzugsweise mittlere Molekulargewichte $\overline{M}_w$ von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Formmassen möglich.

Geeignete thermoplastische Polycarbonate und Polyestercarbonate sind bekannt (vgl. z.B. DE-AS 1 495 626, DE-OS 2 232 877, DE-OS 2 703 376, DE-OS 2 714 544, DE-OS 3 000 610, DE-OS 3 832 396, DE-OS 3 077 934), z. B. herstellbar durch Umsetzung von Diphenolen der Formeln (I) und (II)

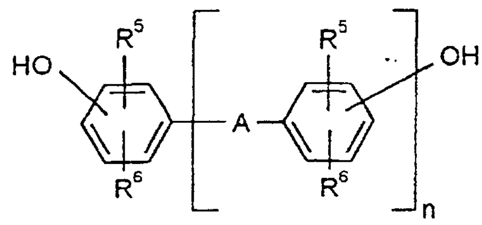

(I)

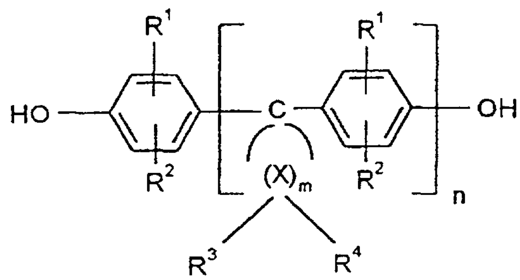

(II)

worin

A eine Einfachbindung, $C_1$-$C_5$-Alkylen, $C_2$-$C_5$-Alkyliden, $C_5$-$C_6$-Cycloalkyliden, -O-, -S-, -SO-, $-SO_2-$ oder -CO- ist,

$R^5$ und $R^6$ unabhängig voneinander für Wasserstoff, Methyl oder Halogen, insbesondere für Wasserstoff, Methyl, Chlor oder Brom stehen,

$R^1$ und $R^2$ unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$- Aralkyl, bevorzugt Phenyl-$C_1$-$C_4$-alkyl, insbesondere Benzyl, bedeuten,

m eine ganze Zahl von 4 bis 7, bevorzugt 4 oder 5 ist,

n 0 oder 1 ist,

$R^3$ und $R^4$ für jedes X individuell wählbar sind und unabhängig voneinander Wasserstoff oder $C_1$-$C_6$-Alkyl bedeuten und

X Kohlenstoff bedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Bevorzugte erfindungsgemäße Formmassen enthalten 2,5 bis 35 Gew.-Teile, vorzugsweise 5 bis 30 Gew.-Teile und besonders bevorzugt 7,5 bis 25 Gew.-Teile Pfropfpolymerkomponente I), 5 bis 40 Gew.-Teile, vorzugsweise 7,5 bis 35 Gew.-Teile und besonders bevorzugt 10 bis 30 Gew.-Teile, Pfropfpolymerkomponente II) und 25 bis 92,5 Gew.-Teile, vorzugsweise 35 bis 87,5 Gew.-Teile und besonders bevorzugt 45 bis 82,5 Gew.-Teile, kautschukfreies Copolymerisat III).

Falls zusätzlich weitere kautschukfreie nicht aus Vinylmonomeren aufgebaute Thermoplastharze verwendet werden, beträgt deren Menge bis zu 500 Gew.-Teile, vorzugsweise bis zu 400 Gew.-Teile und besonders bevorzugt bis zu 300 Gew.-Teile (jeweils bezogen auf 100 Gew.-Teile I) + II) + III)).

Die Herstellung der erfindungsgemäßen Formmassen erfolgt durch Vermischen der Komponenten I), II) und III) auf üblichen Mischaggregaten (vorzugsweise auf Mehrwalzenstühlen, Mischextrudern oder Innenknetern).

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

## Beispiele

Komponenten:

ABS-Pfropfpolymerisat 1 (Komponente I))

29 Gew.-Teile (gerechnet als Feststoff) eines durch radikalische Polymerisation hergestellten anionisch emulgierten Polybutadienlatex mit einem $d_{50}$-Wert von 282 nm, einem $d_{90}$-$d_{10}$-Wert von 48 nm und einem Gelgehalt von 49 Gew.-% und 29 Gew.-Teile (gerechnet als Feststoff) eines durch radikalische Polymerisation hergestellten anionisch emulgierten Polybutadienlatex mit einem $d_{50}$-Wert von 432 nm, einem $d_{90}$-$d_{10}$-Wert von 128 nm und einem Gelgehalt von 81 Gew.-% werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird. Danach werden 42 Gew.-Teile eines Gemisches aus 73 Gew.-% Styrol und 27 Gew.-% Acrylnitril und 0,1 Gew.-Teile tert.-Dodecylmercaptan innerhalb 4 Stunden derart zugegeben, daß innerhalb der ersten 2 Stunden 70 Gew.-% der Gesamtmonomerenmenge zum Reaktionsgemisch zudosiert werden, parallel dazu wird 1 Gew.-Teil (gerechnet als Festsubstanz) des Natriumsalzes eines Harzsäuregemisches (Dresinate 731, gelöst in alkalisch eingestelltem Wasser) über 4 Stunden zudosiert. Nach einer 4-stündigen Nachreaktionszeit wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende Pulver bei 70°C im Vakuum getrocknet.

<u>ABS -Pfropfpolymerisat 2</u> (Vergleichsmaterial, nicht erfindungsgemäß)

Die unter "ABS-Pfropfpolymer 1" beschriebene Vorschrift wurde wiederholt, wobei anstelle des Polybutadienlatexgemisches 58 Gew.-Teile (gerechnet als Feststoff) des Polybutadienlatex mit einem $d_{50}$-Wert von 282 nm, einem $d_{90}$-$d_{10}$-Wert von 48 nm und einem Gelgehalt von 49 Gew.-% eingesetzt wurden.

<u>ABS-Pfropfpolymer 3</u> (Vergleichsmaterial, nicht erfindungsgemäß)

Die unter "ABS-Pfropfpolymer 1" beschriebene Vorschrift wurde wiederholt, wobei anstelle des Polybutadienlatexgemisches 58 Gew.-Teile (gerechnet als Feststoff) des Polybutadienlatex mit einem $d_{50}$-Wert von 432 nm, einem $d_{90}$-$d_{10}$-Wert von 128 nm und einem Gelgehalt von 81 Gew.-% eingesetzt werden.

<u>ABS-Pfropfpolymer 4</u> (Komponente II)

50 Gew.-Teile (gerechnet als Feststoff) eines durch radikalische Polymerisation hergestellten anionisch emulgierten Polybutadienlatex mit einem $d_{50}$-Wert von 129 nm, einem $d_{90}$-$d_{10}$-Wert von 33 nm und einem Gelgehalt von 89 Gew.-% werden mit Wasser auf einem Feststoffgehalt von ca. 20 Gew.-% gebracht, wonach auf 63°C erwärmt und mit 0,5 Gew.-Teilen Kaliumperoxodisulfat (gelöst in Wasser) versetzt wird. Danach werden 50 Gew.-Teile eines Gemisches aus 73 Gew.-% Styrol und 27 Gew.-% Acrylnitil innerhalb 4 Stunden gleichmäßig zudosiert, parallel dazu wird 1 Gew.-Teil (gerechnet als Festsubstanz) des Natriumsalzes eines Harzsäuregemisches (Dresinate 731, gelöst in alkalisch eingestelltem Wasser) über einen Zeitraum von 4 Stunden zudosiert. Nach einer vierstündigen Nachreaktionszeit wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende Pulver bei 70°C im Vakuum getrocknet.

<u>ABS-Pfropfpolymer 5</u> (Vergleichsmaterial, nicht erfindungsgemäß)

Die unter "ABS-Pfropfpolymer 4" beschriebene Vorschrift wurde wiederholt, wobei ein Polybutadienlatex mit einem $d_{50}$-Wert von 127 nm, einem $d_{90}$-$d_{10}$-Wert von 63 nm und einem Gelgehalt von 75 Gew.-% eingesetzt wurde.

<u>Harzkomponente</u> (Komponente III))

Statistisches Styrol/Acrylnitril-Copolymerisat (Styrol:Acrylnitril-Gewichtsverhältnis 72:28) mit einem $\overline{M}_w$ von ca. 85.000 und $\overline{M}_w/\overline{M}_n-1 \leq 2$ erhalten durch radikalische Lösungspolymerisation.

<u>Harzkomponente 2</u> (Komponente III))

Statistisches α-Methylstyrol/Acrylnitril-Copolymerisat (α-Methylstyrol:Acrylnitril-Gewichtsverhältnis 72:28) mit einem $\overline{M}_w$ von ca. 75.000 und $\overline{M}_w/\overline{M}_n-1$ ca. 2 erhalten durch Emulsionspolymerisation.

<u>Formmassen</u>

Die oben beschriebenen Polymerkomponenten werden in den in Tabelle 1 angegebenen Anteilen, 2 Gew.-Teilen Ethylendiaminbisstearylamid (Beispiele 1 bis 4), 2 Gew.-Teilen Pentaerythrittetrastearat (Beispiele 5 bis 12), 0,5 Gew.-Teilen Magnesiumstearat (Beispiele 5 bis 8) und 0,1 Gew.-Teilen eines Silikonöls (Beispiele 1 bis 8) in einem Innenkneter vermischt und nach Granulierung zu Prüfstäben und zu einer ebenen Platte (zur Beurteilung der Oberfläche) verarbeitet.

Folgende Daten wurden ermittelt:

Kerbschlagzähigkeit bei Raumtemperatur ($a_k^{RT}$) und bei -40°C ($a_k^{-40°C}$) nach ISO 180/1A (Einheit: kJ/$m^2$), Kugeldruckhärte ($H_C$) nach DIN 53456 (Einheit: N/$mm^2$), Wärmeformbeständigkeit (Vicat B) nach DIN 53460 (Einheit: °C), thermoplastische Fließfähigkeit (MVI) nach DIN 53735U (Einheit: $cm^3$/10 min) und Oberflächenglanz nach DIN 67530 bei einem Reflektionswinkel von 20° (Reflektometerwert).

Aus den Beispielen (Prüfdaten siehe Tabelle 2) ist ersichtlich, daß sich die erfindungsgemäßen Formmassen durch sehr hohe Glanzwerte sowie gute Werte für Zähigkeit (insbesondere bei tiefer Temperatur), Fließfähigkeit und Kugeldruckhärte (E-Modul) auszeichnen. Außerdem ist zu erkennen (siehe Beispiele 9 bis 12), daß die erfindungsgemäßen Vorteile auch bei der Herstellung wärmeformbeständiger ABS-Produkteinstellungen erhalten werden.

Tabelle 1

| Zusammensetzungen der Formmassen | | | | | | | |
|---|---|---|---|---|---|---|---|
| Bsp. | ABS-Pfropfpolymer 1 (Gew.-Tle.) | ABS-Pfropfpolymer 2 (Gew.-Tle.) | ABS-Pfropfpolymer 3 (Gew.-Tle.) | ABS-Pfropfpolymer 4 (Gew.-Tle.) | ABS-Pfropfpolymer 5 (Gew.-Tle.) | Harzkomponente 1 (Gew.-Tle.) | Harzkomponente 2 (Gew.-Tle.) |
| 1 | 15 | - | - | 15 | - | 70 | - |
| 2(Vgl.) | - | 15 | - | 15 | - | 70 | - |
| 3(Vgl.) | - | - | 15 | 15 | - | 70 | - |
| 4(Vgl.) | 15 | - | - | - | 15 | 70 | - |
| 5 | 18,75 | - | - | 18,75 | - | 62,5 | - |
| 6(Vgl.) | - | 18,75 | - | 18,75 | - | 62,5 | - |
| 7 (Vgl.) | - | - | 18,75 | 18,75 | - | 62,5 | - |
| 8 (Vgl.) | 18,75 | - | - | - | 18,75 | 62,5 | - |
| 9 | 21 | - | - | 9 | - | 40 | 30 |
| 10(Vgl.) | - | 21 | - | 9 | - | 40 | 30 |
| 11 (Vgl.) | - | - | 21 | 9 | - | 40 | 30 |
| 12(Vgl.) | 21 | - | - | - | 9 | 40 | 30 |

Tabelle 2

| Prüfdaten der Formmassen | | | | | | |
|---|---|---|---|---|---|---|
| Bsp. | $a_k^{RT}$ (kJ/m²) | $a_k^{-40°C}$ (kJ/m²) | $H_C$ (N/mm²) | Vicat B (°C) | MVI (cm³ /10min) | Glanzgrad |
| 1 | 16,2 | 7,7 | 107 | 99 | 37,4 | 97 |
| 2 (Vgl.) | 14,5 | 6,2 | 101 | 99 | 35,1 | 94 |
| 3 (Vgl.) | 15,9 | 6,6 | 108 | 100 | 36,7 | 93 |
| 4 (Vgl.) | 15,0 | 6,4 | 103 | 98 | 34,9 | 93 |
| 5 | 26,8 | 16,5 | 94 | 99 | 20,7 | 95 |
| 6 (Vgl.) | 20,5 | 8,5 | 91 | 99 | 18,8 | 93 |
| 7 (Vgl.) | 22,5 | 9,9 | 94 | 100 | 20,4 | 92 |
| 8 (Vgl.) | 21,8 | 9,0 | 92 | 99 | 18,8 | 93 |
| 9 | 22,5 | 10,0 | 103 | 105 | 8,7 | 93 |
| 10 (Vgl.) | 17,5 | 7,2 | 97 | 104 | 8,4 | 90 |
| 11 (Vgl.) | 18,1 | 7,6 | 102 | 105 | 9,0 | 88 |
| 12 (Vgl.) | 18,8 | 7,8 | 98 | 104 | 8,5 | 88 |

**Patentansprüche**

**1.** Thermoplastische Formmassen vom ABS-Typ enthaltend

I) mindestens ein Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart einer Mischung aus einem Butadienpolymerisatlatex (A) mit einem Teilchendurchmesser $d_{50}$ ≤320 nm, einer Breite der Teilchendurchmesserverteilung (gemessen als $d_{90}$-$d_{10}$ aus der integralen Teilchendurchmesserverteilung) von 30 bis 100 nm, und einem Gelgehalt ≤70 Gew.-% und einem Butadienpolymerisatlatex (B) mit einem Teilchendurchmesser $d_{50}$ ≥370 nm, einer Breite der Teilchendurchmesserverteilung (gemessen als $d_{90}$-$d_{10}$ aus der integralen Teilchendurchmesserverteilung) von 50 bis 500 nm, und einem Gelgehalt ≥70 Gew.-%, wobei die Butadienpolymerisatlatices jeweils 0 bis 50 Gew.-% eines weiteren Vinylmonomeren copolymerisiert enthalten und wobei das Massenverhältnis von eingesetzten Pfropfmonomeren zu eingesetzten Butadienpolymerisaten 25:75 bis 70:30 ist,

II) mindestens ein Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart eines Butadienpolymerisatlatex (C) mit einem Teilchendurchmesser $d_{50}$ von 110 bis 150 nm, einer Breite der Teilchendurchmesserverteilung (gemessen als $d_{90}$-$d_{10}$ aus der integralen Teilchendurchmesserverteilung) von 20 bis 50 nm, und einem Gelgehalt von 80 bis 98 Gew.-%, wobei der Butadienpolymerisatlatex 0 bis 50 Gew.-% eines weiteren Vinylmonomeren copolymerisiert enthält und wobei das Massenverhältnis von eingesetzten Pfropfmonomeren zu eingesetzten Butadienpolymerisat 30:70 bis 60:40 ist, und

(III) mindestens ein kautschukfreies Copolymerisat aus Styrol und Acrylnitril im Gewichtsverhältnis 90:10 bis 50:50, wobei Styrol und/oder Acrylnitril ganz oder teilweise durch α-Methylstyrol, Methylmethacrylat oder N-Phenylmaleinimid ersetzt werden kann.

**2.** Thermoplastische Formmassen nach Anspruch 1, worin das Pfropfpolymerisat I) durch Monomerenzulauf zum Gemisch der Butadienpolymerisatlatices (A) und (B) so hergestellt worden ist, daß innerhalb der ersten Hälfte der Monomerenzulaufzeit 55 bis 90 Gew.-% der Monomeren zudosiert werden.

**3.** Thermoplastische Formmassen vom ABS-Typ, gemäß Anspruch 1, enthaltend

I) mindestens ein Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart einer Mischung aus einem Butadienpolymerisatlatex (A) mit einem Teilchendurchmesser $d_{50}$ von 260 bis 310 nm, einer Breite der Teilchendurchmesserverteilung (gemessen als $d_{90}$-$d_{10}$ aus der integralen Teilchendurchmesserverteilung) von 40 bis 80 nm, und einem Gelgehalt von 40 bis 65 Gew.-%, und einem Butadienpolymerisatlatex (B) mit einem Teilchendurchmesser $d_{50}$ von 380 bis 450 nm, einer Breite der Teilchendurchmesserverteilung (gemessen als $d_{90}$-$d_{10}$ aus der integralen Teilchendurchmesserverteilung) von 100 bis 400 nm, und einem Gelgehalt von 75 bis 90 Gew.-%, wobei die Butadienpolymerisatlatices jeweils 0 bis 50 Gew.-% eines weiteren Vinylmonomeren copolymerisiert enthalten und wobei das Massenverhältnis von eingesetzten Pfropfmonomeren zu eingesetzten Butadienpolymerisaten 25:75 bis 70:30 ist,

II) mindestens ein Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart eines Butadienpolymerisatlatex (C) mit einem Teilchendurchmesser $d_{50}$ von 120 bis 140 nm, einer Breite der Teilchendurchmesserverteilung (gemessen als $d_{90}$-$d_{10}$ aus der integralen Teilchendurchmesserverteilung) von 25 bis 45 nm, und einem Gelgehalt von 85 bis 95 Gew.-%, wobei der Butadienpolymerisatlatex 0 bis 50 Gew.-% eines weiteren Vinylmonomeren copolymerisiert enthält und wobei das Massenverhältnis von eingesetzten Pfropfmonomeren zu eingesetzten Butadienpolymerisat 30:70 bis 60:40 ist, und

(III) mindestens ein kautschukfreies Copolymerisat aus Styrol und Acrylnitril im Gewichtsverhältnis 90:10 bis 50:50, wobei Styrol und/oder Acrylnitril ganz oder teilweise durch α-Methylstyrol, Methylmethacrylat oder N-Phenylmaleinimid ersetzt werden kann.

**4.** Thermoplastische Formmassen nach Anspruch 3, worin das Pfropfpolymerisat I) durch Monomerenzulauf zum Gemisch der Butadienpolymerisatlatices (A) und (B) so hergestellt wird, daß innerhalb der ersten Hälfte der Monomerenzulaufzeit 60 bis 80 Gew.-% der Monomeren zudosiert werden.

**5.** Thermoplastische Formmassen nach Anspruch 1, enthaltend zusätzlich mindestens ein Harz ausgewählt aus aromatischem Polycarbonat, aromatischem Polyestercarbonat, Polyester, Polyamid.

**6.** Verwendung der thermoplastischen Formmassen nach Anspruch 1 zur Herstellung von Formteilen.

**Claims**

**1.** Thermoplastic moulding compositions of the ABS type, containing

I) at least one graft polymer, which is obtainable by emulsion polymerisation of styrene and acrylonitrile in the weight ratio of 90:10 to 50:50, styrene and/or acrylonitrile being wholly or partly replaceable by α-methylstyrene, methyl methacrylate or N-phenylmaleimide, in the presence of a mixture comprising a butadiene polymer latex (A) having a particle diameter $d_{50}$ of ≤320 nm, a particle diameter distribution (measured as $d_{90}$-$d_{10}$ from the integral particle diameter distribution) of 30 to 100 nm in width and a gel content of ≤70 wt.% and a butadiene polymer latex (B) having a particle diameter $d_{50}$ of ≥370 nm, a particle diameter distribution (measured as $d_{90}$-$d_{10}$ from the integral particle diameter distribution) of 50 to 500 nm in width and a gel content of ≥70 wt.%, the butadiene polymer latexes each containing copolymerised 0 to 50 wt.% of an additional vinyl monomer and the mass ratio of graft monomers used to butadiene polymers used being from 25:75 to 70:30,

II) at least one graft polymer, which is obtainable by emulsion polymerisation of styrene and acrylonitrile in the weight ratio of 90:10 to 50:50, styrene and/or acrylonitrile being wholly or partly replaceable by α-methylstyrene, methyl methacrylate or N-phenylmaleimide, in the presence of a butadiene polymer latex (C) having a particle diameter $d_{50}$ of from 110 to 150 nm, a particle diameter distribution (measured as $d_{90}$-$d_{10}$ from the integral particle diameter distribution) of 20 to 50 nm in width and a gel content of from 80 to 98 wt.%, the butadiene polymer latex containing copolymerised 0 to 50 wt.% of an additional vinyl monomer and the mass ratio of graft monomer used to butadiene polymer used being from 30:70 to 60:40, and

III) at least one rubber-free copolymer of styrene and acrylonitrile in the weight ratio of 90:10 to 50:50, styrene and/or acrylonitrile being wholly or partly replaceable by α-methylstyrene, methyl methacrylate or N-phenylmaleimide.

**2.** Thermoplastic moulding compositions according to claim 1, wherein the graft polymer I) has been prepared by introducing the monomers into the mixture of the butadiene polymer latexes (A) and (B) in such a way that 55 to 90 wt.% of the monomers are added within the first half of the period for the introduction of the monomers.

**3.** Thermoplastic moulding compositions of the ABS type according to claim 1, containing

I) at least one graft polymer, which is obtainable by emulsion polymerisation of styrene and acrylonitrile in the weight ratio of 90:10 to 50:50, styrene and/or acrylonitrile being wholly or partly replaceable by α-methylstyrene, methyl methacrylate or N-phenylmaleimide, in the presence of a mixture comprising a butadiene polymer latex (A) having a particle diameter $d_{50}$ of from 260 to 310 nm, a particle diameter distribution (measured as $d_{90}$-$d_{10}$ from the integral particle diameter distribution) of 40 to 80 nm in width and a gel content of from 40 to 65 wt.%, and a butadiene polymer latex (B) having a particle diameter $d_{50}$ of from 380 to 450 nm, a particle diameter distribution (measured as $d_{90}$-$d_{10}$ from the integral particle diameter distribution) of 100 to 400 nm in width and a gel content of from 75 to 90 wt.%, the butadiene polymer latexes each containing copolymerised 0 to 50 wt.% of an additional vinyl monomer and the mass ratio of graft monomers used to butadiene polymers used being from 25:75 to 70:30,

II) at least one graft polymer, which is obtainable by emulsion polymerisation of styrene and acrylonitrile in the weight ratio of 90:10 to 50:50, styrene and/or acrylonitrile being wholly or partly replaceable by α-methylstyrene, methyl methacrylate or N-phenylmaleimide, in the presence of a butadiene polymer latex (C) having a particle diameter $d_{50}$ of from 120 to 140 nm, a particle diameter distribution (measured as $d_{90}$-$d_{10}$ from the integral particle diameter distribution) of 25 to 45 nm in width and a gel content of from 85 to 95 wt.%, the butadiene polymer latex containing copolymerised 0 to 50 wt.% of an additional vinyl monomer and the mass ratio of graft monomer used to butadiene polymer used being from 30:70 to 60:40,

III) at least one rubber-free copolymer of styrene and acrylonitrile in the weight ratio of 90:10 to 50:50, styrene and/or acrylonitrile being wholly or partly replaceable by α-methylstyrene, methyl methacrylate or N-phenylmaleimide.

**4.** Thermoplastic moulding compositions according to claim 3, wherein the graft polymer I) is prepared by introducing the monomers into the mixture of the butadiene polymer latexes (A) and (B) in such a way that 60 to 80 wt.% of the monomers are added within the first half of the period for the introduction of the monomers.

**5.** Thermoplastic moulding compositions according to claim 1, containing in addition at least one resin selected from aromatic polycarbonate, aromatic polyester carbonate, polyester, polyamide.

**6.** Use of the thermoplastic moulding compositions according to claim 1 for the production of moulded parts.

## Revendications

**1.** Matières à mouler thermoplastiques de type ABS, contenant :

I) au moins un polymère greffé, qui est accessible par polymérisation en émulsion de styrène et d'acrylonitrile en un rapport pondéral allant de 90:10 à 50:50, où le styrène et/ou l'acrylonitrile peuvent être complètement ou partiellement remplacés par l'α-méthylstyrène, le méthacrylate de méthyle ou le N-phénylmaléinimide, en présence d'un mélange d'un latex de polymère de butadiène (A) avec un diamètre moyen des particules $d_{50}$ ≤ 320 nm, une largeur de distribution du diamètre des particules (mesurée comme $d_{90}$-$d_{10}$ à partir de la distribution intégrale du diamètre des particules) allant de 30 à 100 nm, et une teneur en gel ≤ 70% en poids, et d'un latex de polymère de butadiène (B) avec un diamètre moyen des particules $d_{50}$ ≥ 370 nm, une largeur de distribution du diamètre des particules (mesurée comme $d_{90}$-$d_{10}$ à partir de la distribution intégrale du diamètre des particules) allant de 50 à 500 nm, et une teneur en gel ≥ 70% en poids, où les latex de polymère de butadiène contiennent chaque fois de 0 à 50% en poids d'un autre monomère vinylique copolymérisé et où le rapport massique des monomères de greffage mis en oeuvre aux polymères de butadiène mis en oeuvre

se situe dans l'intervalle allant de 25:75 à 70:30,
II) au moins un polymère greffé, qui est accessible par polymérisation en émulsion de styrène et d'acrylonitrile en un rapport pondéral allant de 90:10 à 50:50, où le styrène et/ou l'acrylonitrile peuvent être complètement ou partiellement remplacés par l'$\alpha$-méthylstyrène, le méthacrylate de méthyle ou le N-phénylmaléinimide, en présence d'un mélange d'un latex de polymère de butadiène (C) avec un diamètre moyen des particules $d_{50}$ allant de 110 à 150 nm, une largeur de distribution du diamètre des particules (mesurée comme $d_{90}$-$d_{10}$ à partir de la distribution intégrale du diamètre des particules) allant de 20 à 50 nm, et une teneur en gel allant de 80 à 98% en poids, où le latex de polymère de butadiène contient de 0 à 50% en poids d'un autre monomère vinylique copolymérisé et où le rapport massique des monomères de greffage mis en oeuvre au polymère de butadiène mis en oeuvre se situe dans l'intervalle allant de 30:70 à 60:40, et
III) au moins un copolymère exempt de caoutchouc, constitué de styrène et d'acrylonitrile en un rapport pondéral allant de 90:10 à 50:50, où le styrène et/ou l'acrylonitrile peuvent être complètement ou partiellement remplacés par l'$\alpha$-méthylstyrène, le méthacrylate de méthyle ou le N-phénylmaléinimide.

**2.** Matières à mouler thermoplastiques suivant la revendication 1, où le polymère greffé I) est préparé par introduction des monomères dans le mélange des latex de polymère de butadiène (A) et (B), de sorte que au cours de la première moitié de la période d'introduction des monomères, 55 à 90% en poids des monomères ont été ajoutés.

**3.** Matières à mouler thermoplastiques de type ABS suivant la revendication 1, contenant :

I) au moins un polymère greffé, qui est accessible par polymérisation en émulsion de styrène et d'acrylonitrile en un rapport pondéral allant de 90:10 à 50:50, où le styrène et/ou l'acrylonitrile peuvent être complètement ou partiellement remplacés par l'$\alpha$-méthylstyrène, le méthacrylate de méthyle ou le N-phénylmaléinimide, en présence d'un mélange d'un latex de polymère de butadiène (A) avec un diamètre moyen des particules $d_{50}$ allant de 260 à 310 nm, une largeur de distribution du diamètre des particules (mesurée comme $d_{90}$-$d_{10}$ à partir de la distribution intégrale du diamètre des particules) allant de 40 à 80 nm, et une teneur en gel allant de 40 à 65% en poids, et d'un latex de polymère de butadiène (B) avec un diamètre moyen des particules $d_{50}$ allant de 380 à 450 nm, une largeur de distribution du diamètre des particules (mesurée comme $d_{90}$-$d_{10}$ à partir de la distribution intégrale du diamètre des particules) allant de 100 à 400 nm, et une teneur en gel allant de 75 à 90% en poids, où les latex de polymère de butadiène contiennent chaque fois de 0 à 50% en poids d'un autre monomère vinylique copolymérisé et où le rapport massique des monomères de greffage mis en oeuvre aux polymères de butadiène mis en oeuvre se situe dans l'intervalle allant de 25:75 à 70:30,
II) au moins un polymère greffé, qui est accessible par polymérisation en émulsion de styrène et d'acrylonitrile en un rapport pondéral allant de 90:10 à 50:50, où le styrène et/ou l'acrylonitrile peuvent être complètement ou partiellement remplacés par l'$\alpha$-méthylstyrène, le méthacrylate de méthyle ou le N-phénylmaléinimide, en présence d'un mélange d'un latex de polymère de butadiène (C) avec un diamètre moyen des particules $d_{50}$ allant de 120 à 140 nm, une largeur de distribution du diamètre des particules (mesurée comme $d_{90}$-$d_{10}$ à partir de la distribution intégrale du diamètre des particules) allant de 25 à 45 nm, et une teneur en gel allant de 85 à 95% en poids, où le latex de polymère de butadiène contient de 0 à 50% en poids d'un autre monomère vinylique copolymérisé et où le rapport massique des monomères de greffage mis en oeuvre au polymère de butadiène mis en oeuvre se situe dans l'intervalle allant de 30:70 à 60:40, et
III) au moins un copolymère exempt de caoutchouc, constitué de styrène et d'acrylonitrile en un rapport pondéral allant de 90:10 à 50:50, où le styrène et/ou l'acrylonitrile peuvent être complètement ou partiellement remplacés par l'$\alpha$-méthylstyrène, le méthacrylate de méthyle ou le N-phénylmaléinimide.

**4.** Matières à mouler thermoplastiques suivant la revendication 3, où le polymère greffé I) est préparé par introduction des monomères dans le mélange des latex de polymère de butadiène (A) et (B), de sorte que au cours de la première moitié de la période d'introduction des monomères, 60 à 80% en poids des monomères ont été ajoutés.

**5.** Matières à mouler thermoplastiques suivant la revendication 1, contenant en outre, au moins une résine, choisie parmi les polycarbonates aromatiques, les polyester-carbonates aromatiques, les polyesters, les polyamides.

**6.** Utilisation des matières à mouler thermoplastiques suivant la revendication 1, pour la préparation d'articles moulés.